# EUROPEAN PATENT APPLICATION

(11) **EP 1 009 120 A2**
(43) Date of publication of application: **14.06.2000**
(21) Application number: 99309760.9
(22) Date of filing: 03.12.1999
(51) Int. Cl.: H04J 14/02

(54) **Multichannel optical ADD/DROP, multiplexor/demultiplexor**

(30) Priority: 10.12.1998 US 208465
(71) Applicant: NORTEL NETWORKS CORPORATION, Montreal, Quebec H2Y 3Y4 (CA)
(72) Inventor: Danagher, David J., Nepean, Ontario K2G 6B4 (CA); Solheim, Alan Glen, Kanata, Ontario K2M 1C4 (CA); Somani, Azmina, Nepean, Ontario K2G 6B4 (CA)
(74) Representative: Dearling, Bruce Clive

(57) **Abstract**

A band multiwavelength optical add/drop multiplexer (OADM) (1,5) wavelength multiplexed communication network drops and adds several channels from a fiber passing many channels, while providing high isolation between the channels. The band OADM (1,5) comprises a wide-band demultiplexer (11) for separating an input multichannel optical signal (Sᵢₙ) into a drop multichannel optical signal (B1) of a first band, and a passthrough multichannel optical signal (B2) of a second band. The band OADM also comprises a wide-band multiplexer (21) for combining an add multichannel signal of a third band (B1')with the passthrough signal (B2) to obtain an output multichannel optical signal (Sₒᵤₜ). Narrow band multiplexers (23) and demultiplexers (13) may be used for a band of interest, to further combine or separate individual channels. The band OADM (1,5) enables increase of capacity per node without affecting the passthrough loss of other channels.

## Description

### BACKGROUND OF THE INVENTION

### Field of the Invention

This invention relates to add and drop operations for WDM (wavelength division multiplexed) networks, and more particularly to a band multichannel optical add/drop multiplexer/demultiplexer.

### Background Art

Increasing the transmission capacity of a network is of a major interest to network providers. This is currently done by increasing the transmission rate, using the WDM (wavelength division multiplexing) or dense WDM (DWDM) technique, and by implementing all-optical transmission.

An add/drop multiplexer (ADM) is a network element that combines and separates a plurality of client signals, each carried by a wavelength (channel), into/from a multichannel signal. An electronic ADM directs the electrical variant of the optical multichannel signal according to its destination to a local user (a drop channel), or to a remote user (passthrough or express channels). Add channels may be inserted at the respective ADM node of the network, also in an electronic format. Electro-optical and respectively optical-electric conversions are necessary at the border between the optical network and the electronic ADM.

OADMs (optical add/drop multiplexers) are an alternative, being capable of dropping and adding optical signals at specific wavelengths into an optical fiber, without any opto-electronic and electro-optic conversion. Optical implementation of a larger category of network equipment is currently under consideration, due to the many advantages over the hybrid electro-optical approach. With an-all optical network, the network providers may take full advantage of the optical transparency, and consequently provide higher rates, needed for emerging applications. Furthermore, improved link budgets may be obtained, and set-up and upgrade procedures for the respective links are importantly simplified.

It is known to use optical filters for OADMs. Such OADM's consist of a 1xN demultiplexer, followed by an Nx1 multiplexer. The first filter element demultiplexes the frequency components (the channels) of the input WDM signal into N waveguide ports. A channel of interest is dropped to a local receiver, by optically connecting the corresponding port to the receiver. The second filter element multiplexes the remaining N-1 channels into the fiber output.

A signal at the same frequency as that of the dropped channel can be added to the filter output through the unused port of the multiplexer. The frequency reuse capability of this type of filter is an essential feature for maximizing the performance of a WDM optical ring network for example.

ADM filters are cascaded when more than one channel needs to be accessed at a network node, each ADM filter adding or dropping a channel to or from the WDM signal. However, the optical elements involved in this process cause an overall loss of light, resulting in a decrease in the signal-to-noise ratio. Also, this type of add/drop filters operate at fixed frequencies determined by the connection between the two elements of the filter.

Other types of OADMs are based on three-port optical circulators. A circulator receives the WDM signal at the input port and directs the light in a predetermined direction into a transmission filter. Based on the channel wavelength, the transmission filter reflects all channels but one, which is transmitted to a first output port, and thereafter to the local receiver. The remaining channels are reflected towards the optical circulator, and then arrive at a second output port. Many circulators are also provided with a fiber directional coupler for adding a channel to the optical signal travelling over the main fiber.

In general, interference between the added light and the light propagating along the main fiber often occurs in this type of OADM. The power levels after the new channel is added must be more or less equal to the other express channels for single channel ADMs. Otherwise, downstream channels would suffer channel cross-talk, which degrades system performance. To address this problem, the added power levels are generally controlled with attenuators, which waste power and degrade the signal.

Furthermore, when upgrading a network equipped with single channel OADMs, the express traffic must be interrupted or switched to another fiber to accommodate new ADM traffic.

### SUMMARY OF THE INVENTION

According to the present invention, there is provided a band optical add/drop multiplexer (OADM) for a wavelength multiplexed communication network, comprising a wide-band demultiplexer for receiving an input multichannel optical signal and separating same into a first multichannel optical signal of a first band, and a second multichannel optical signal of a second band, and a wide-band multiplexer for combining a third multichannel signal of a third band with the second multichannel optical signal to obtain an output multichannel optical signal.

According to another aspect of the invention, there is provided a band optical add/drop multiplexer (OADM) for a wavelength multiplexed communication network comprising, a wide-band demultiplexer for receiving an input multichannel optical signal and separating same into a first multichannel optical signal of a first band, and a second multichannel optical signal of a second band and a narrow-band multiplexer for separating the first multichannel optical signal into all component channels.

According to a further aspect of the invention there is provided a method of multiplexing/demultiplexing a multichannel optical signal comprising separating the multichannel optical signal into a first and a second multichannel optical signal, with a first wide-band ADM filter, separating the first multichannel optical signal into a plurality of consecutive optical channels and directing each of the channels to a corresponding receiver and passing the second multichannel optical signal from the first wide-band filter to a second wide-band filter.

Advantageously, the OADM according to the invention provides for improved link budgets for linear, hubbed and meshed DWDM systems, which use add/drop of channels. Also, network set-up procedures and upgrades may be importantly simplified when the present OADM is used.

A preferred embodiment of the present invention therefore provides a multiwavelength OADM that alleviates totally or in part the drawbacks of the prior art OADMs. More especially, the preferred embodiment provides a band OADM for dropping and adding several channels from a fiber passing many channels, while providing high isolation between the channels. Beneficially, the preferred embodiment is able to increase capacity per node without affecting the passthrough loss of other channels.

### BRIEF DESCRIPTION OF THE DRAWINGS

The features and advantages of exemplary embodiments will be apparent from the following more particular description, as illustrated in the appended drawings, where:
Figure 1A illustrates the block diagram of a band OADM according to a preferred embodiment of the invention;
Figure 1B illustrates the block diagram of another band OADM according to a preferred embodiment of the invention;
Figure 2 shows the application of the band OADM's to a mesh optical ring; and
Figure 3 illustrates an application of the OADM of Figure 1A to a hubbed optical ring.

### DESCRIPTION OF THE PREFERRED EMBODIMENT

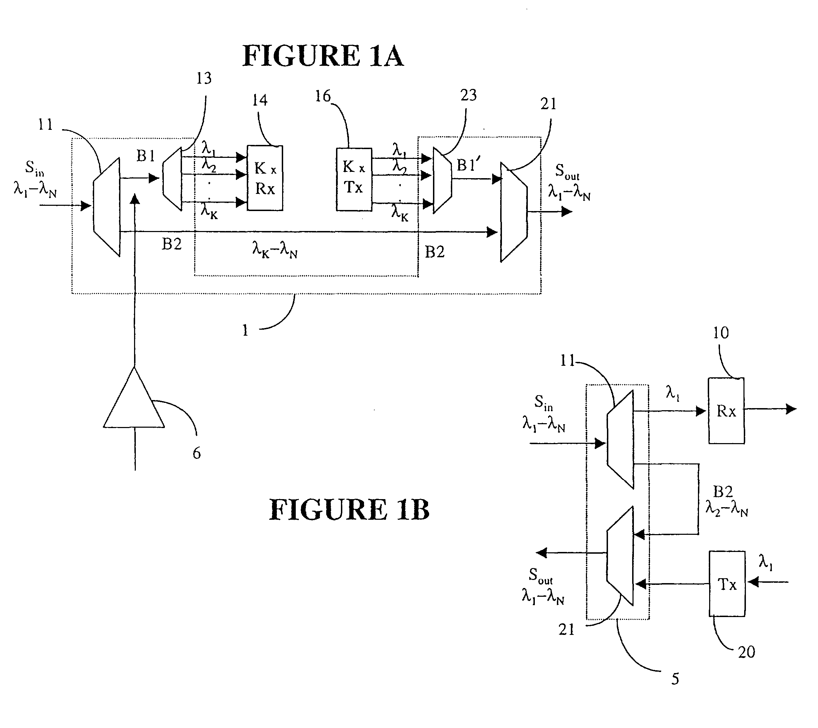

Figure 1A illustrates the block diagram of a band OADM 1 according to a preferred embodiment of the invention. The band OADM 1 comprises a demultiplexer 11 for selecting a portion (B1) of the optical spectrum, comprising K consecutive channels, and passing through another portion (B2) of the optical spectrum, comprising (N-K) consecutive channels. Band OADM 1 also includes a multiplexer 21 for combining an add band B1' with passthrough band B2, to output a multichannel optical signal Sₒᵤₜ. The add band B1' comprises (M) consecutive channels. The band OADM 1 may also comprise a blocking filter (not shown), if required to obtain input-to-output isolation.

It is to be understood that a passthrough band, such as B2, is not always present, and that the added and dropped bands B1' and B1 may have a different width. The width of the spectrum is determined by filters 11, 21. Also, while the wavelength of an added channel is generally the same with the wavelength of a dropped channel (wavelength reuse), this is not always necessary. Furthermore, there may also be asymmetric implementation of band OADMs, where the number of the added channels (M) is different from the number (K) of the dropped channels.

Demultiplexer 11 and multiplexer 21 are preferably wide-band optical filters. In the example of Figure 1, filter 11 separates signal Sᵢₙ into bands B1 and B2. The signals of band B1, carried by channels λ₁ - λ_{K}, are dropped by demultiplexer 11, while the signals of band B2, carried by channels λ_{K} - λ_{N}, pass directly to the multiplexer 21. Add band B2' comprises channels λ₁ - λ_{M}, and these are combined with the passthrough channels by filter 21.

The wide-band filter 11 is followed by a narrow-band optical filter 13 for separating a wavelength from the respective drop multichannel signal. In the example of Figure 1A, narrow-band filter 13 separates the channels from band B1 to present each drop channel λ₁ - λ_{K} to a receiver unit 14. The narrow-band filter 13 comprises a concatenation of filters, each for a specific wavelength, while receiver unit 14 includes a receiver for each channel.

Similarly, the multiplexer 21 of the band OADM 1 of Figure 1A is preceded by a narrow-band filter 23, for combining a number of local channels of a respective wavelength λ₁ - λ_{M} into a respective multichannel add signal.

Wide band filters 11 and 21 may be manufactured to separate more than two frequency bands, according to the application for which they are used.

The wide-band filter 11, 21 can be a commercially multilayer thin film filter, or may be a filter according to other filter technologies. Narrow-band filters 13 and 23 are also commercially available devices.

Narrow band multiplexer 23 can also be replaced with a wavelength independent power combiner (for example a fused fiber coupler). Such power combiners are typically easier to manufacture than narrow band filters and hence lower cost.

Figure 1 B illustrates a configuration of a lower cost band OADM 5, which does not use narrow-band filters 13, 23. This configuration may be used for a network node where access to one channel only is necessary. This also allows the single channel transmitter wavelength to have wider tolerance and hence potentially lower cost. In this case, the channel of interest, let's say channel λ₁ of band B1 is accessed directly by a single channel receiver 10 and retransmitted with a single transmitter 20.

The main advantage of band OADM's is that channels may be dropped and/or added a band at the time, making upgrades at a node possible without interruption of other nodes. Further, the number of channels added/dropped at a node are determined by the wavelength tolerance of the narrow band multiplexer/demultiplexer and transmitters. This allows the capacity per node to be engineered independent of the capacity demand at other nodes. This lowers the total system cost by only incurring the cost of providing the higher capacity at the nodes that require it.

Furthermore, the express channels experience a lower loss than in prior art methods. For example, in prior art OADM's, passthrough channel λ_{N} passes through all K individual filters for the dropped channels, and through the multiplexer filter 21. In the configuration according to the invention, channel λ_{N} - λ_{K} or λ_{N} (but not λ₁) λ_{N} passes only through the wide-band filters 11 and 21. This results in an improved link budget.

The double filtering through the wide and narrow filters provides a better isolation between the channels than in the currently available ADM's. Double filtering enables using a higher power for the added channels, resulting in longer link budgets in hubbed rings and especially in mesh rings.

In addition, optical amplifiers can be placed between the band filters and the narrow band multiplexers/demultiplexers, as shown in Figure 1A. Optical amplifiers 6 may be a low cost device, as it only needs to operate over a narrow spectral range (B1) and to amplify a smaller number of channels K, rather than all N channels at the input of filter 11. Optical amplifiers may be placed only where required, allowing the optical link budget for each node to be independent of the other traffic on the ring.

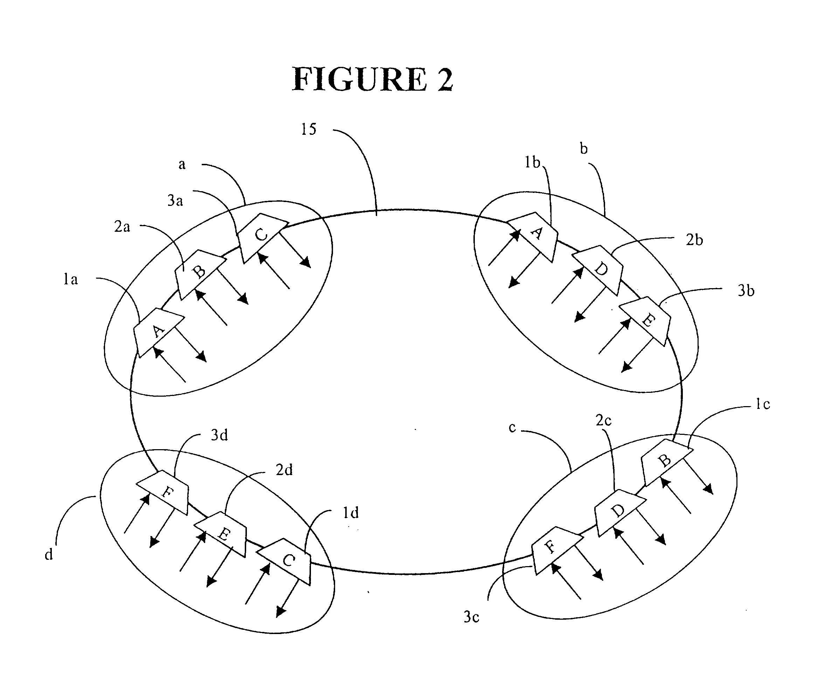

Figure 2 shows an application of band OADM 's to a mesh optical ring, which omits representation of the receivers, transmitters and other equipment that may be present at a certain network node. A meshed network is a network that connects a plurality of network nodes to each-other.

The mesh network of Figure 2 comprises four nodes a, b, c, and d connected in a ring configuration over fiber 15, each node being provided with three band filters according to a preferred embodiment of the invention. In this example, each node a to d must access three bands to ensure full connectivity between all nodes, i.e. each node must be equipped with three band filters. Thus, node a is equipped with band filters 1a, 2a and 3a, node b is equipped with band filters 1b, 2b and 3b, node c is equipped with band filters 1c, 2c and 3c, and node d is equipped with band filters 1d, 2d and 3d. Each band filter is further marked with a capital letter A-F, indicating the band that it adds/drops, for better illustrating connectivity along the ring.

Each band A-F is further multiplexed/demultiplexed into several individual channels with narrow band filters, as previously described, although these filters are not illustrated in Figure 2 for simplification. It is also possible to use narrow band multiplexers/ demultiplexers configured as a concatenation of individual channel multiplexers and demultiplexers.

It is to be understood that the number of the band ADM's at a node and the number of channels into a respective band are not limited to three, these are design parameters.

The ring of Figure 2 operates to connect any two sites using as many channels as needed in a particular band. For example, a signal is transmitted from node a to node b in band A. The channel is added at node 1a by the band multiplexer 1a, and dropped at node b by band demultiplexer 1b. A signal can also be transmitted from site b to site a in band A, reusing the same wavelength. The channel is now added at node b by band multiplexer 1b, and dropped by band demultiplexer 1a at node a.

The width of the spectrum (band) is determined by the design of the wide band filters 1 and can be the same for all nodes, or different.

It is apparent that, for example, the channels added at site B for site A do not cause cross-talk problems at intermediate sites C or D, due to the double filtering. This means that the power launched at B over the ring could be higher than that of the channels passing through this node.

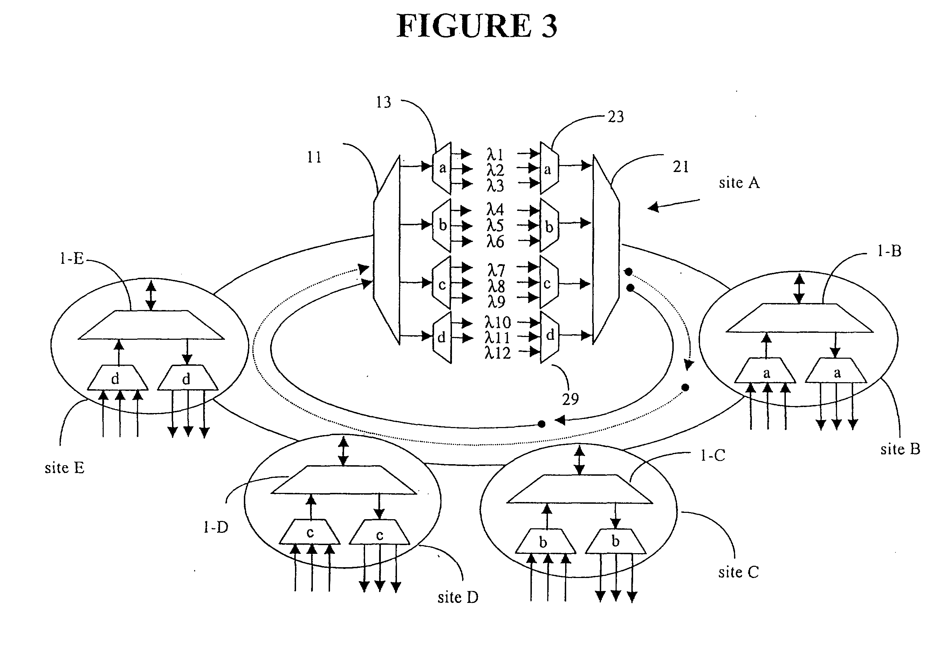

Figure 3 illustrates another application of the OADM of Figure 1A to a hubbed optical ring. In this type of configurations, all sites communicate with the hub, which is illustrated at site A. Each site is equipped with a band OADM 1-A to 1-E. The OADM at site A comprises a wide band demultiplexer 11 and a wide band multiplexer 21, as shown in Figure 1A. In this example, filter 11 separates the input multichannel signal into four frequency bands B1-B4, each comprising three channels λ₁ - λ₃, λ₄ ― λ₆, λ₇ - λ₉, and λ₁₀ - λ₁₂. Narrow band filters 13-19 further separate the channels within a band.

Similarly, narrow band filters 23-29 combine the channels within a band, and multiplexer filter 21 re-combines the four frequency bands B1-B4 into the output multichannel signal. Each OADM drops/adds signals received in one of the bands to/for the respective site. For example, site B communicates with the hub at site A over band B1, site C over band B2, site D over band B3 and site E over band B4.

It is apparent that high power launched at site A for site C does not cause cross-talk problems at B due to the double filtering. Higher power launched at A results in simpler, lower cost system set-up, and longer link budgets.

The band multiwavelength optical add/drop multiplexer (OADM) wavelength multiplexed communication network thus drops and adds several channels from a fiber passing many channels, while providing high isolation between the channels. The band OADM comprises a wide-band demultiplexer for separating an input multichannel optical signal into a drop multichannel optical signal of a first band, and a passthrough multichannel optical signal of a second band. The band OADM also comprises a wide-band multiplexer for combining an add multichannel signal of a third band with the passthrough signal to obtain an output multichannel optical signal. Narrow band multiplexers and demultiplexers may be used for a band of interest, to further combine or separate individual channels. The band OADM enables increase of capacity per node without affecting the passthrough loss of other channels.

## Claims

1. A band optical add/drop multiplexer (OADM) for a wavelength multiplexed communication network, comprising:
a wide-band demultiplexer for receiving an input multichannel optical signal and separating same into a first multichannel optical signal of a first band, and a second multichannel optical signal of a second band; and
a wide-band multiplexer for combining a third multichannel signal of a third band with said second multichannel optical signal to obtain an output multichannel optical signal.

2. The band OADM as claimed in claim 1, wherein said first optical multichannel signal comprises a plurality (K) of transmission channels.

3. The band OADM as claimed in claim 1, wherein said first optical multichannel signal comprises a plurality (K) of transmission channels and said second multichannel signal comprises a plurality (N-K) of transmission channels.

4. The band OADM as claimed in claim 1, 2 or 3, wherein said first and said third bands comprise the same number (K) of channels and each channel in said first band has a carrier frequency corresponding to the carrier frequency of a channels in said third band.

5. The band OADM as claimed in claim 1, 2 or 3, wherein said first and said third bands comprise a different number of channels.

6. The band OADM as claimed in any preceding claim, further comprising a narrow-band demultiplexer for separating said first multichannel optical signal into a plurality of transmission channels.

7. The band OADM as claimed in any preceding claim, further comprising a narrow-band multiplexer having:
an output for providing said third multichannel optical signal to an output fibre;
a plurality K of inputs, each providing a transmission channel (k) of said third multichannel signal; and
wherein all said ends are coupled together so that all said K channels are combined into said third multichannel signal, and wherein (k) is the index of a transmission channel in said third band.

8. The band OADM as claimed in any preceding claim, further comprising a narrow-band demultiplexer for separating said first multichannel optical signal into said plurality K of transmission channels.

9. The band OADM as claimed in any preceding claim, further comprising an individual channel ADM element for dropping said individual channel from said first multichannel optical signal and for adding said individual channel to said third multichannel optical signal.

10. A band optical add/drop multiplexer (OADM) for a wavelength multiplexed communication network comprising:
a wide-band demultiplexer for receiving an input multichannel optical signal and separating same into a first multichannel optical signal of a first band, and a second multichannel optical signal of a second band; and
a narrow-band demultiplexer for separating said first multichannel optical signal into all component channels.

11. A method of multiplexing/demultiplexing a multichannel optical signal comprising:
separating said multichannel optical signal into a first and a second multichannel optical signal, using a first wide-band ADM filter;
separating said first multichannel optical signal into a plurality of optical channels and directing each of said channels to a corresponding receiver; and
passing said second multichannel optical signal from said first wide-band filter to a second wide-band filter.

12. A method as claimed in claim 11, further comprising combining, using said second wide band filter, said second multichannel signal with a third multichannel optical signal to obtain an output multichannel optical signal.

13. A method as claimed in claim 11 or 12, further comprising any of increasing and decreasing said first band and modifying the number of transmission channels in said first band according to the width of said first band, while leaving said second band unchanged.

14. A method as claimed in claim 11, 12 or 13, further comprising any of increasing and decreasing the spacing between the channels of said first band.
